# EUROPÄISCHE PATENTSCHRIFT

(11) **EP 1 069 724 B1**
(45) Veröffentlichungstag und Bekanntmachung des Hinweises auf die Patenterteilung: **23.01.2002**
(21) Anmeldenummer: 99440181.8
(22) Anmeldetag: 05.07.1999
(51) Int. Cl.: H04L 1/06, H04B 7/02

(54) **Makro-Diversity-Übertragung in einem Mobilfunksystem**
Macro-diversity transmission in a mobile communications system
Système de téléphonie mobile avec transmission en macro diversité

(43) Veröffentlichungstag der Anmeldung: 17.01.2001
(73) Patentinhaber: ALCATEL, 75008 Paris (FR)
(72) Erfinder: Hägele, Frank, 70825 Korntal (DE); Konnerth, Samuel, 71254 Ditzingen (DE)
(74) Vertreter: Brose, Gerhard, Dipl.-Ing.

(56) Entgegenhaltungen:
- EP-A- 0 777 395
- EP-A- 0 876 045
- GB-A- 2 324 446
- US-A- 5 539 749
- US-A- 5 809 090
- FABIO LONGONI: "TS 25.247 : UTRAN Iur/lub User plane protocol for DCH data streams, v.0.4.2" TSG-RAN WG3, [Online] 20. - 24. September 1999, XP002120580 Sophia Antipolis, France Retrieved from the Internet: <URL:ftp://ftp.3gpp.org/TSG_RAN/WG3_Iu/TSG R3_07/Docs/Pdfs/r3-99c37.pdf> [retrieved on 1999-10-26]
- LONGONI F.: 'UTRAN Iub/Iur Interface User Plane Protocol for DCH Data Streams TS 25.427 V 0.2.1' 3RD GENERATION PARTNERSHIP PROJECT (3GPP), TECHNICAL SPECIFICATION GROUP RAN Juni 1999, Seiten 1 - 12

## Beschreibung

Die Erfindung betrifft ein Verfahren zum Übertragen von Datenblöcken von mindestens zwei sich im Makro-Diversity-Zustand befindenen Funkfeststationen über mindestens zwei Diversity-Verbindungen an eine zentrale Station nach dem Oberbegriff des Anspruchs 1.

Außerdem betrifft die Erfindung einen Datenrahmen, ein Mobilfunksystem, eine zentrale Station und eine Funkfestation, die zur Durchführung des Verfahrens geeignet sind, nach einem der Oberbegriffe der nebengeordneten Ansprüche.

Es sind Mobilfunksysteme bekannt mit Funkfeststationen, die parallel über verschiedene Funkpfade von einer Mobilstation Funksignale empfangen und die in den Funksignalen enthaltene Nutzdaten an eine zentrale Station weiterleiten. Im Empfänger der zentralen Station können die fehlerhaft über einen der Funkpfade übertragene Nutzdaten durch diejenigen Nutzdaten ersetzt werden, die fehlerfrei auf einem anderen Funkpfad übertragen wurden. Mit anderen Worten: Die Nutzdaten werden parallel über getrennte Diversity-Verbindungen übertragen, um auf der Empfangsseite möglichst viele fehlerfrei übertragene Nutzdaten zu erhalten, d.h. um einen möglichst großen Diversity-Gewinn zu erzielen.

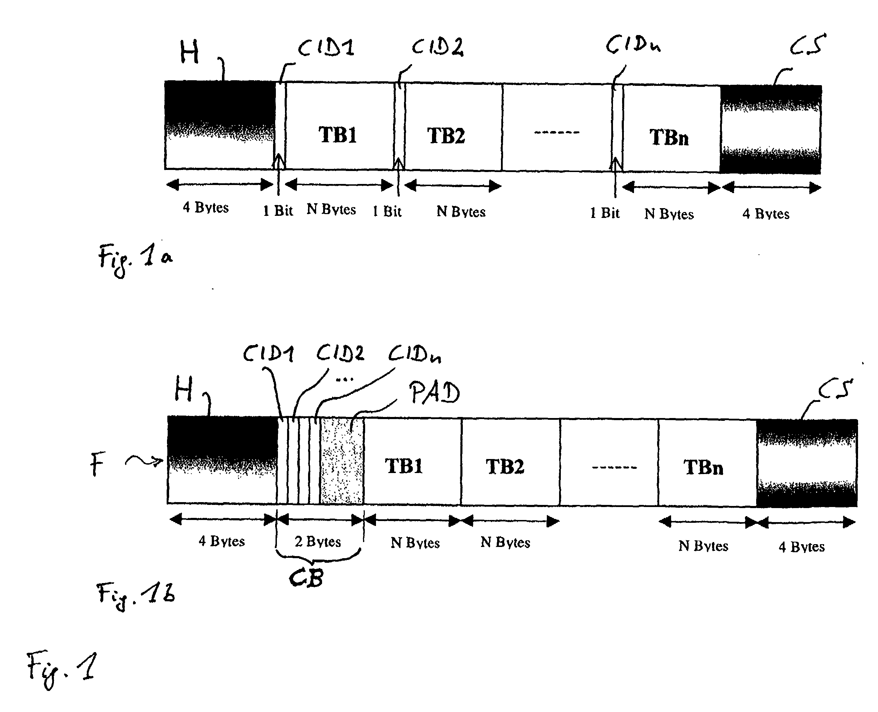

In diesem Zusammenhang ist das Dokument mit der Bezeichnung "TS 25.427, V 0.2.1" zu nennen, das Teil der technischen Beschreibung zu dem zukünftigen Mobilfunksystem UMTS (universal mobile telecommunication system) ist, und das im Juni 1999 von der Standardisierungs-Organisation 3 GPP (3^{rd} Generation Partnership Project) auf der homepeage "http://www.3gpp.org" veröffentlicht wurde unter dem Titel "UTRAN lub/lur Interface User Plane Protocol for DCH Data Streams". Dort ist in dem Kapitel 7 ein Verfahren zur Übertragung von Datenblöcken beschrieben, nämlich den sogenannten "transport blocks", welche Nutzdaten enthalten und welche von den Funkfeststationen, den sogenannten "Node B", an die zentrale Station, dem sogannten "Radio Network Controller RCN", übertragen werden. Wie dort im Kap. 7, anhand der Fig. 1 und der Tabelle 1 beschrieben ist, werden die Datenblöcke in einen Datenrahmen eingefügt, wobei jedem Datenblock ein ihm zugeordnetes Prüffeld, der sogenannte "checksum indicator" vorangestellt wird. Der Inhalt des Prüffeldes gibt an, ob der nachfolgende Datenblock fehlerfrei ist oder nicht. Die Funkfestationen übertragen parallel die Datenblöcke über verschiedene Diversity-Verbindungen an die zentrale Station, die dann für jede Diversity-Verbindung die Prüffelder auswertet und die einen solchen Datenblock, der auf einer Diversity-Verbindung nicht fehlerfrei übertragen wurde, durch einen entsprechenden Datenblock ersetzt, der auf einer anderen Diversity-Verbindung fehlerfrei übertragen wurde. Demnach beschreibt das genannte 3 GPP - Dokument ein Verfahren zum Übertragen von Datenblöcken von mindestens zwei sich im Makro-Diversity-Zustand befindenen Funkfeststationen über mindestens zwei Diversity-Verbindungen an eine zentrale Station, bei dem von jeder der Funkfeststationen die Datenblöcke zusammen mit Prüffeldern innerhalb von Datenrahmen an die zentrale Station gesendet werden, wobei jedem der Datenblöcke eines der Prüffelder zugeordnet wird, bei dem von der zentralen Station die Prüffelder für jede der Diversity-Verbindungen ausgewertet werden, um diejengen Datenblöcke zu erkennen, die fehlerfrei übertragen wurden, und bei dem von der zentralen Station die über eine der Diversity-Verbindungen nicht fehlerfrei übertragenen Datenblöcke durch die auf einer der anderen Diversity-Verbindung fehlerfrei übertragenen Datenblöcke ersetzt werden. Neben dem Verfahren und der Struktur des Datenrahmens sind aus dem genannten 3 GPP- Dokument auch noch ein Mobilfunksystem, eine zentrale Station und eine Funkfeststation zur Durchführung des Verfahrens bekannt.

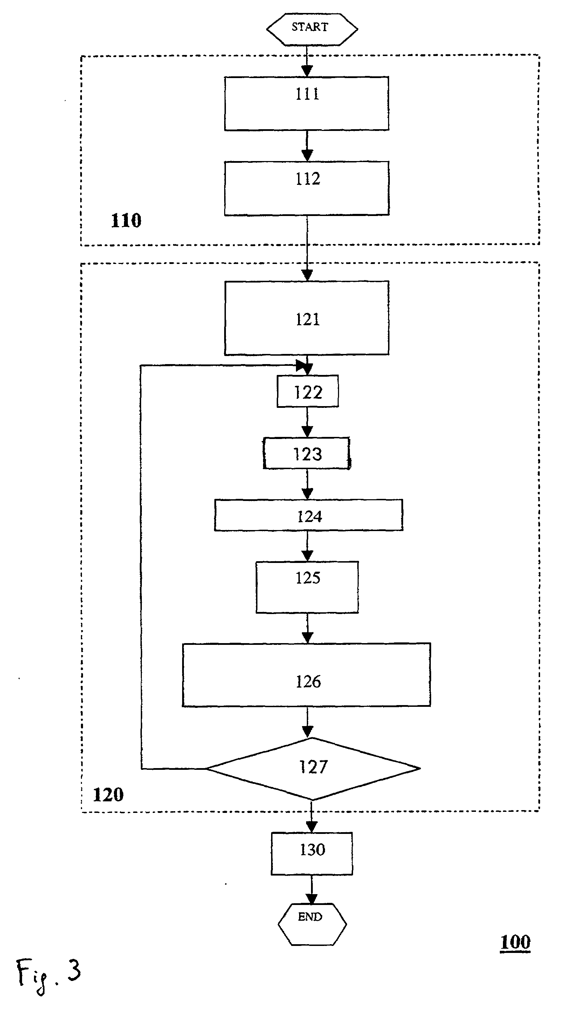

Aus der GB-A-2 324 446 ist ein Verfahren zum Übertragen von Datenblöcken in Form von Kodierwörtern ("code words") bekannt, bei dem mindestens zwei sich im Makro-Diversity-Zustand befindende Funkfeststationen die von ihnen empfangenen Datenblöcke an einen Vergleicher ("comparator") weiterleiten. Wie dort anhand der Fig. 3 und auf Seiten 10-12 beschrieben ist, bilden jeweils sieben Datenblöcke ("code words") einen Signalrahmen ("signal frame"), der auch ein Prüffeld ("signal frame error status") hat. Aber auch einige der Datenblöcke, vorzugweise der erste und fünfte Datenblock, haben ein Prüffeld ("code word error status"), wodurch diese Datenblöcke als bevorzugte Datenblöcke ("prioritized code words") behandelt werden. Der Vergleicher vergleicht nun die Prüffelder der bevorzugten Datenblöcke, die auf den verschiedenen Diversitypfaden empfangen wurden, mit einem Qualitäts-Schwellwert und wählt den Datenblock mit der höchsten Qualität aus. Erfüllt keiner der Datenblöcke die Qualitätsanforderung, so wird ein ergänzendes Prüffeld ("supplement error status") ausgewertet, das vorzugweise durch das Prüffeld des entsprechenden Signalrahmens repräsentiert wird. Dieses bekannte Verfahren ist besonders zugeschnitten für die Übertragung von Sprachdaten. Es ist recht aufwendig, da es die Auswertung von verschiedenen Arten von Prüffeldern im Rahmen eines abgestuften Vergleichs erfordert.

Die Erfindung beruht nun auf der Erkenntnis, daß bei Verwendung der herkömmlichen Struktur des Datenrahmens und bei Durchführung des bekannten Verfahrens jeder Datenrahmen in seiner ganzen Länge, d.h. vom ersten bis zum letzten Bit ausgelesen werden muß, um die einzelnen Prüffelder zu finden. Besondere Schwierigkeiten beim Auslesen bereitet dabei die Anordnung der Prüffelder, die dazu führt, daß der Anfang eines jeden Datenblocks um jeweils ein Bit, nämlich um die Länge des vorangestellten Prüffeldes, nach hinten geschoben wird. Demnach ist das Auslesen der Datenblöcke durch eine byte-orientierte Adressierung nicht möglich und die Rechengeschwindigkeit bei der Bearbeitung der Daten wird verzögert.

Ausgehend von dieser Erkenntnis stellt sich die Erfindung die Aufgabe, das eingangs genannte Verfahren zu verbessern und einen neu strukturierten Datenrahmen vorzuschlagen, um die Auswertung der Prüffelder und den Zugriff auf die Datenblöcke zu beschleunigen. Außerdem sollen ein zur Durchführung des verbesserten Verfahrens geeignetes Mobilsfunksystem, eine zentrale Station sowie eine Funkfeststation vorgeschlagen werden.

Gelöst wird die Aufgabe durch ein Verfahren mit den Merkmalen des Anspruchs 1 und durch einen Datenrahmen, ein Mobilfunksystem, eine zentrale Station sowie eine Funkfeststation mit den Merkmalen nach einem der nebengeordneten Ansprüche.

Demnach wird vorgeschlagen, daß in jedem Datenrahmen die Datenblöcke direkt aneinander gereiht werden, wobei jeder Datenblock eine durch die Zahl Acht teilbare Anzahl von Bits enthält, und daß die Prüffelder zusammen in einen einen dafür vorgesehenen Prüfblock geschrieben werden. Demzufolge wird ein Datenrahmen mit einer neuen Struktur verwendet, die sich durch eine direkte Aneinanderreihung von Datenblöcken auszeichnet, die jeweils ein Ganzes oder Vielfaches eine Bytes umfassen. Dadurch ist eine byte-orientierte Struktur gegeben, die einen schnellen Zugriff auf einzelne Datenblöcke erlaubt. Durch die erfindungsgemäße Datenrahmenstruktur und durch das darauf abgestellte neue Verfahren wird eine deutliche Steigerung der Bearbeitungsgeschwindigkeit bei der digitalen Signalverarbeitung im Empfänger der Zentrale erreicht.

Besonders vorteilhafte Ausgestaltungen der Erfindung sind den Unteransprüchen zu entnehmen.

Demnach ist es besonders vorteilhaft, wenn die Prüffelder jeweils mindestens ein Bit enthalten und alle Bits der Prüffelder zusammenhängend in den Prüfblock geschrieben werden, wobei der Prüfblock gegebenenfalls mit Füllbits aufgefüllt wird, so daß auch der Prüfblock eine durch die Zahl Acht teilbare Anzahl von Bits enthält. Dadurch kann auch der Prüfblock als Ganzes adressiert und schnell ausgelesen werden.

Es ist außerdem besonders vorteilhaft, wenn für jeden Datenrahmen aus den Bits der Prüffelder ein Prüfwort gebildet wird und zunächst für eine der Diversity-Verbindungen das Prüfwort mit einem ersten Referenzwort verglichen wird, um zumindest einen nicht fehlerfrei auf dieser Diversity-Verbindung übertragenen Datenblock zu erkennen, und wenn anschließend für eine andere der Diversity-Verbindungen das entsprechende Prüfwort mit einem zweiten Referenzwort verglichen wird, um zu erkennen, ob der entsprechende Datenblock auf dieser Diversity-Verbindung fehlerfrei übertragen wurde. Durch diese Maßnahmen werden nur soviele Prüfwörter wie nötig ausgewertet und werden die fehlerfreien Datenblöcke in sehr kurzer Zeit durch selektiven Zugriff gesammelt.

In diesem Zusammenhang ist es besonders vorteilhaft, wenn durch eine logische UND-Verknüpfung des Prüfworts mit dem ersten Referenzwort ein erstes Ergebnis berechnet wird, wenn durch eine logische ODER-Verknüpfung dieses ersten Ergebnisses mit dem negierten ersten Referenzwort ein erster Zwischenwert berechnet wird und wenn durch Negation dieses ersten Zwischenwertes das zweite Referenzwort berechnet wird.

Für den Fall, daß zumindest ein fehlerhaft übertragener Datenblock nicht durch einen entsprechenden fehlerfrei übertragenen Datenblock ersetzt werden kann, ergibt sich dann ein besonderer Vorteil, wenn das Verfahren nach Ablauf einer vorgebaren Zeitdauer abgebrochen wird.

Die Erfindung wird nun anhand eines Ausführungsbeispiels und mit Bezugnahme auf die folgenden Zeichnungen näher beschrieben:
- Fig. 1a,: die den herkömmlichen Aufbau eines Datenrahmens zeigt;
- Fig. 1b,: die den erfindungsgemäßen Aufbau eines Datenrahmens zeigt;
- Fig. 2,: die schematisch den Aufbau eine erfindungsgemäßen Mobilfunksystems zeigt;
- Fig. 3,: die ein Ablaufdiagramm für ein erfindungsgemäßes Verfahren zeigt und
- Fig. 4;: die eine schematische Darstellung der Bearbeitung von Prüfwörtern nach diesem Verfahren wiedergibt.

In der Fig. 1a ist schematisch der Aufbau eines Datenrahmens dargestellt, so wie er aus dem Stand der Technik bekannt ist. Der Datenrahmen beginnt mit einem Kopffeld H, das z.B. eine Länge von vier Byte hat und in das Informationen über die Struktur des Daten rahmens eingetragen sind. Diese Informationen geben u.a. die Anzahl der im Datenrahmen enthaltenen Datenblöcke TB1 bis TBn und die Länge dieser Datenblöcke an. Der Datenrahmen endet mit einem Kontrollfeld CS, in das eine sogenannte "checksum" eingetragen wird. Dieses Kontrollfeld hat ebenfalls die Länge von vier Byte. Herkömmlicherweise ist vor jedem der Datenblöcke TB1 bis TBn ein Prüffeld CID1 bis CIDn angeordnet, in das ein Bit eingetragen wird. Das Bit in dem Prüffeld (z.B. CID1) gibt an, ob der nachfolgende Datenblock (TB1) fehlerfrei empfange Nutzdaten enthält oder nicht. Die Prüffelder CID1 bis CIDn haben demnach die Aufgabe einer Markierung (flag), die auf logisch Null oder auf logisch Eins gesetzt wird.

Der Datenrahmen wird von einer zentralen Station empfangen und dort ausgewertet, um die fehlerfreien Datenblöcke aus dem Datenrahmen auszulesen. Die in Fig. 1a dargestellte herkömmliche Struktur des Datenrahmens macht es jedoch erforderlich, daß dazu der Datenrahmen in seiner ganzen Länge, d.h. vom ersten bis zum letzten Bit ausgelesen werden muß, um die einzelnen Prüffelder CID1 bis CIDn zu finden. Besondere Schwierigkeiten beim Auslesen bereitet dabei die Anordnung der Prüffelder, die dazu führt, daß der Anfang eines jeden Datenblocks um jeweils ein Bit, nämlich um die Länge des vorangestellten Prüffeldes, nach hinten geschoben wird. Das bedeutet beispielsweise, daß der erste Datenblock TB1 nicht unmittelbar an das Ende des Kopffeldes H anschließt, sondern erst ein Bit später. Der nachfolgende Datenblock TB2 wird aufgrund des vorangestellten Prüffeldes CID2 zusätzlich um ein Bit nach hinten verschoben. Wenn also der erste Datenblock TB1 eine Länge von z.B. 10 Byte hat, so beginnt der zweite Datenblock TB2 erst an der Stelle, die 10 Bytes plus 2 Bits hinter dem Ende des Kopffeldes H liegt. Demnach ist das Auslesen der Datenblöcke durch eine byte-orientierte Adressierung nicht möglich und die Rechengeschwindigkeit bei der Bearbeitung der Daten wird verzögert. Ausgehend von dieser Erkenntnis wird nun ein neuer Datenrahmen vorgeschlagen:

Fig. 1b zeigt einen erfindungsgemäß strukturierten Datenrahmen. Dieser Datenrahmen enthält einen zusätzlichen Prüfblock CB, der unmittelbar an das Kopffeld H anschließt und an dem sich die Datenblöcke TB1 bis TBn direkt aneinander gereiht anschließen. In den hinzugefügten Prüfblock CB sind in zusammenhängender Form alle Prüffelder CID1 bis CIDn eingetragen. Außerdem enthält der Prüfblock CB einige Füllbits PAD, die dafür sorgen, daß die Länge des Prüfblockes einer Anzahl von Bits entspricht, die durch Acht teilbar ist. Das heißt, der Prüfblock CB hat eine byte-orientierte Länge, in diesem Beispiel genau 2 Bytes. Damit kann dieser Prüfblock als Ganzes sehr einfach adressiert und ausgelesen werden. Durch die direkte Aneinanderreihung der Datenblöcke TB1 bis TBn ist auch hier eine byte-orientierte Struktur gegeben, die einen sehr schnellen und zielgerichteten Zugriff auf einzelne Datenblöcke erlaubt. Durch die in Fig. 1b gezeigte Struktur wird eine deutliche Steigerung der Bearbeitungsgeschwindigkeit bei der digitalen Signalverarbeitung im Empfänger der zentralen Station erreicht.

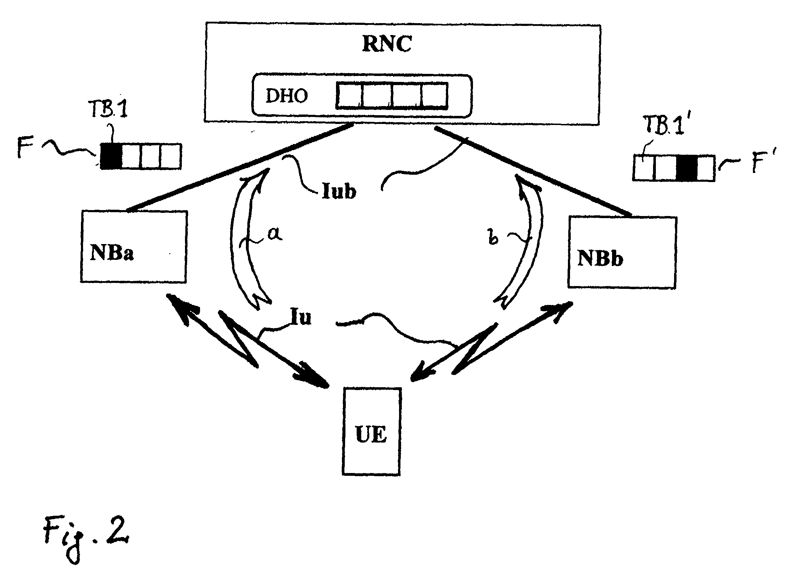

Die Fig. 2 zeigt schematisch den Aufbau eines Mobilfunksystems, in dem solche Datenrahmen, wie der in Fig. 1b gezeigte, übertragen werden. Das Mobilfunksystem ist zur Durchführung des noch später beschriebenen erfindungsgemäßen Verfahrens ausgeführt und enthält eine zentrale Station RNC, an die mehrere Funkfeststationen angeschlossen sind, von denen in der Fig. 2 beispielhaft zwei Funkfeststationen NBa und NBb dargestellt sind. Diese beiden Funkfeststationen befinden sich im Makro-Diversity-Zustand, d.h. sie empfangen gleichzeitig Funksignale von einer Mobilstation UE und leiten die in den Funksignalen enthaltenen Nutzdaten in Form der in Fig. 1b gezeigten Datenrahmenstruktur an die zentrale Station RNC weiter. Die zentrale Station RNC wiederum versucht nun die von einer der Funkfeststationen fehlerhaft empfangenen Datenblöcke durch entsprechende fehlerfrei von der anderen Funkfeststation empfangenen Datenblöcke zu ersetzen. Es sind also zwei Makro-Diversity-Verbindung a und b vorhanden, über welche parallel dieselben Nutzdaten übertragen werden, wobei auftretende Fehler wechselseitig kompensiert werden. Paralle Übertragung bedeutet hier eine Paketdaten-Übertragung von denselben Nutzdaten über verschiedene Übertragungsstrecken. Da es sich um eine Paketdaten-Übertragung handelt, müssen die Übertragungsstrecken nicht aufeinander synchronisiert werden.

In der Fig. 2 sind die Übertragung eines erfindungsgemäß aufgebauten Datenrahmens F von der ersten Funkfeststation NBa an die zentrale Station RNC und die dazu parallele Übertragung eines entsprechenden Datenrahmens F' von der zweiten Funkfeststation NBb an die zentrale Station RNC dargestellt. Der von der ersten Funkfeststation NBa gesendete Datenrahmen F enthält einen fehlerhaften Datenblock TB1, der nach dem noch später beschriebenen erfindungsgemäßen Verfahren in der zentralen Station RNC erkannt wird und der durch einen entsprechenden fehlerfreien Datenblock TB1' ersetzt wird, welcher in dem anderen von der zweiten Funkfeststation NBb gesendeten Datenrahmen F' enthalten ist. Die zentrale Station RCN ersetzt den fehlerhaften Datenblock TB1 durch den fehlerfreien Datenblock TB1', der dieselben Nutzdaten enthält wie der Datenblock TB1. Gleichfalls werden von der zweiten Funkfeststation NBb gesendete fehlerhafte Datenblöcke (z.B. der dritte Datenblock) durch entsprechende von der ersten Funkfeststation gesendeten Datenböcke ersetzt. Demnach werden über die zwei Makro-Diversity-Verbindung a und b parallel innerhalb von den Datenrahmen F und F' dieselben Nutzdaten übertragen, wobei auftretende Fehler wechselseitig kompensiert werden. Aufgrund des nachfolgend beschriebenen erfindungsgemäßen Verfahrens kann diese Kompensation sehr schnell durchgeführt werden:

Die Fig. 3 zeigt das Ablaufdiagramm für ein erfindungsgemäßes Verfahren 100 zum Übertragen von Datenblöcken von mindestens zwei sich im Makro-Diversity-Zustand befindenden Funkfeststationen an eine zentrale Station. Das Verfahren enthält die Schritte 110 bis 130, von denen der Schritt 110 in zwei Teilschritte 111 und 112 unterteilt ist und der Schritt 120 in die Teilschritte 121 bis 127 unterteilt ist. Es wird nun beispielhaft die Übertragung von Datenblöcken von der ersten Funkfeststaion zu der zentralen Station genau beschrieben. Dazu wird im folgenden auch auf die anderen Figuren 1b und 2 Bezug genommen:

Nach dem Start des Verfahrens 100 wird innerhalb der Funkfeststation NBa zunächst der zu sendende Datenrahmen zusammengestellt und gesendet (Schritt 110). Dazu werden in einem ersten Teilschritt 111 die zu sendenden Datenblöcke TB1 bis TBn direkt aneinander gereiht und in den Datenrahmen F eingefügt. Außerdem wird ein Prüfblock CB vor die zu sendenden Datenblöcke in den Datenrahmen F eingefügt. Der Prüfblock CB enthält die den Datenblöcken zugeordneten Prüffelder CID1 bis CIDn sowie eine Anzahl von Füllbits PAD. Damit hat der zu sendende Datenrahmen F die in Fig. 1b dargestellte Struktur und wird nun in einem Teilschritt Teilschritt 112 von der Funkfeststation NBa an die zentrale Station RNC übertragen.

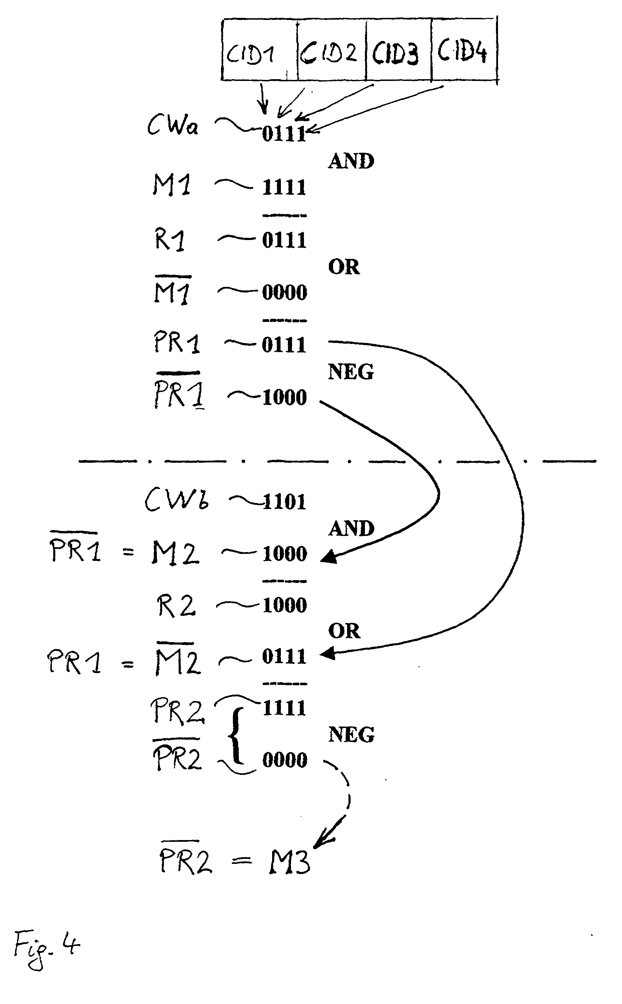

In einem nächsten Schritt 120 wird der Datenrahmen F von der zentralen Station empfangen und in den Teilschritten 121 bis 127 weiter verarbeitet. Diese Datenverarbeitung wird im folgenden auch anhand der Fig. 4 näher beschrieben. Dabei wird zur Vereinfachung davon ausgegangen, daß der zu übertragende Datenrahmen F lediglich vier Datenblöcke (n=4) und entsprechend viele Prüffelder CID1 bis CID4 enthält. Die Prüffelder, die jeweils genau 1 Bit enthalten, sind in den Prüfblock CB eingetragen zusammen mit 12 Füllbits, so daß der Prüfblock genau 2 Bytes umfaßt.

Wie die Fig. 4 zeigt, sind die vier Prüffelder CID1 bis CID4 zu einem Prüfwort CWa = "0111" zusammengefaßt worden. Der Index a bedeutet, daß diese Prüffelder sowie die ihnen zugeordneten Datenblöcke von der ersten Funkfeststation NBa an die zentrale Station übertragen werden. Gemäß dem in Fig. 3 dargestellten erfindungsgemäßen Verfahren wird zuerst in einem ersten Teilschritt 121 der auf Null gesetzte Zähler um Eins erhöht, was wiederum anzeigen soll, daß zunächst die auf der ersten Diversity-Verbindung a übertragenen Daten ausgewertet werden. In einem nächsten Teilschritt 122 werden die vier Prüffelder CID1 bis CID4 gelesen und als ein Prüfwort CWa zwischengespeichert. In einem nächsten Teilschritt 123 wird nun dieses Prüfwort CWa = "0111" mit einem ersten Referenzwort M1 = "1111" logisch UND-verknüpft. Das erste Referenzwort M1 entspricht einer Maske anhand der festgestellt werden soll, welche Bits innerhalb des Prüfwortes CWa auf logisch Null oder auf logisch Eins gesetzt sind. Aus der Und-Verknüpfung resultiert ein erstes Ergebnis R1, das in dem Teilschritt 124 zwischengespeichert wird. In diesem Beispiel gibt das erste Ergebnis R1 = "0111" an, daß bis auf das erste Prüffeld CID1 = "0" alle anderen Prüffelder CID2 bis CID4 auf logisch Eins gesetzt sind. Das bedeutet, daß lediglich der erste Datenblock TB1 fehlerhaft übertragen wurde. Alle anderen Datenblöcke TB2 bis TB4 wurden hingegen fehlerfrei übertragen und werden nun in einem Nutzdatenspeicher gespeichert (Teilschritt 125).

Um den auf der ersten Diversity-Verbindung a fehlerhaft übertragenen Datenblock TB1 durch einen entsprechenden Datenblock TB1', der auf der anderen Diversity-Verbindung b fehlerfrei empfangen wird, zu ersetzen, wird ein neues Referenzwort M2 erzeugt, das für die Auswertung des von der zweiten Funkfeststation empfangenen Prüfwortes CWb =" 1101" verwendet wird. Dazu wird in einem nächsten Teilschritt 126 zunächst das Ergebnis R1 = "0111" mit dem negierten ersten Referenzwort "0000" logisch ODER-verknüpft. Daraus ergibt sich ein erster Zwischenwert PR1 = "0111", der negiert wird zu dem Wert "1000". Dieser negierte Zwischenwert wird nun als zweite Maske M2 = "1000" genommen und mit dem zweiten über die Diversity-Verbindung b empfangenen Prüfwort logisch UND-verknüpft. Daraus ergibt sich ein zweites Ergebnis R2, das in diesem Beispiel dem logischen Work "1000" entspricht und somit anzeigt, daß in dem von der zweiten Funkfeststation NBb übertragenen Datenrahmen der erste Datenblock TB1' fehlerfrei übertragen wurde. Dieses zweite Ergebnis R2 wird auch in dem Nutzdatenspeicher gespeichert.

Wie die Figuren, insbesondere die Fig. 4, veranschaulichen, werden gemäß dem erfindungsgemäßen Verfahren zunächst alle über eine der Diversity-Verbindungen fehlerfrei empfangenen Datenblöcke gesammelt und gespeichert und dann anschließend nur die nicht dort fehlerfrei empfangenen Datenblöcke durch die auf der anderen Diversity-Verbindung fehlerfrei empfangenen entsprechenden Datenblöcke ersetzt. Dabei ermöglicht die erfindungsgemäße Anordnung der Prüffelder CID1 bis CIDn sowie die direkte Aneinanderreihung der Datenblocks in dem Datenrahmen (siehe Fig. 1b) eine sehr schnell Adressierung der Datenblöcke und damit den sehr schnellen Zugriff auf die einzelnen Datenblöcke. Mit anderen Worten: Durch die byte-orientierte Datenrahmenstruktur können einzelne fehlerhaft übertragene Datenblöcke sehr schnell erkannt und sehr schnell durch entsprechende fehlerfrei empfangene einzelne Datenblöcke ersetzt werden.

In weiteren Teilschritt 127 wird überprüft, ob der Inhalt des zuletzt verwendeten Referenzwortes noch mindestens eine logische Null enthält. Ist dies der Fall, so bedeutet dies, daß zumindest noch ein fehlerhafter Datenblock vorliegt, der ersetzt werden muß. Dann müssen die Teilschritte 121 bis 126 erneut durchlaufen werden, wobei der Zähler n um eins erhöht wird. Die Erhöhung des Zählers n führt dazu, daß nun die nächste Diversity-Verbindung b herangezogen wird, um die dort übertragenen Datenrahmen auszuwerten. Wird in dem Teilschritt 127 jedoch festgestellt, daß das zuletzt ermittelte Referenzwort (hier: M3 = "0000") keine logische Eins mehr enthält, so ist angezeigt, daß es keinen fehlerhaft empfangenen Datenblock mehr gibt, der ersetzt werden müßte. Daher springt das Verfahren zum Schritt 130, in dem alle fehlerfrei empfangenen und zwischengespeicherten Datenblöcke nun zusammengefaßt werden und als Nutzdaten weiterverarbeitet werden. Das Verfahren ist damit beendet.

Für den Fall, daß über keine der vorhandenen Diversity-Verbindungen einzelne Datenblöcke fehlerfrei empfangen werden, ist ein Zeitzähler vorgesehen, der das Verfahren nach Ablauf einer vorgebbaren Zeit von beispielsweise 10 ms abbricht. Der Zeitzähler startet mit dem Teilschritt 121 in der Fig. 3. Wenn die vorgegebene Zeit abläuft, wird der Durchlauf der in der Fig. 3 dargestellten Schleife abgebrochen und das Verfahren springt zum Schritt 130. Dadurch wird vermieden, daß bei dem Durchlauf der in der Fig. 3 dargestellten Schleife unnötigerweise gewartet wird.

Einzelne fehlerhaft und nicht ersetzbare Datenblöcke können gegebenenfalls durch ein End-zu-End-Fehlerkorrekturverfahren im Empfänger der zentralen Station korrigiert werden. Handelt es sich bei den innerhalb der Datenblöcke übertragenen Nutzdaten um Sprachdaten, so ist ein solches Korrekturverfahren in der Regel ohne spürbaren Verlust der Sprachqualität durchführbar. In diesem Fall kann sogar eine gewisse Ausfallhäufigkeit an Datenblöcken hingenommen werden, die einer vorgebbaren Rahmenfehlerrate von beispielsweise 10⁻³ entspricht. Gleiches gilt auch für die Übertragung von Bilddaten oder von Faxdaten.

Bei einer Übertragung von Nicht-Sprachdaten in Form von reinen Rechendaten müssen im allgemeinen nicht rekonstruierbare Datenblöcke erneut von der zentralen Station über die Funkfeststationen von der Mobilstation angefordert werden.

Die Erfindung ist nicht auf das oben beschriebene Ausführungsbeispiel beschränkt, sondern umfaßt denkbare Varianten. So ist das Verfahren auch auf lediglich eine Punkt-zu-Punkt-Verbindung anwendbar, um auch dort eine schnelle Datenverarbeitung und einen damit verbundenen hohem Datendurchsatz zu erzielen. Es ist auch denkbar, daß jeder Datenrahmen auch zwei oder mehr Prüfblöcke enthält, die jeweils einer Gruppe von Datenblöcken zugeordnet sind. Dadurch können besonders lange Datenrahmen gebildet werden. Auch die Anordnung des oder der Prüfblocks innerhalb des Datenrahmens varriert werden.

## Patentansprüche

1. Verfahren (100) zum Übertragen von Datenblöcken (TB1, TB2, ... TBn) von mindestens zwei sich im Makro-Diversity-Zustand befindenden Funkfeststationen (NBa; NBb) über mindestens zwei Diversity-Verbindungen (a; b) an eine zentrale Station (RNC), bei dem von den Funkfeststationen (NBa; NBb) die Datenblöcke (TB1, TB2, ... TBn) zusammen mit Prüffeldern (CID1, CID2, ... CIDn) innerhalb von Datenrahmen (F; F') an die zentrale Station (RNC) gesendet werden, wobei jedem (TB1) der Datenblöcke eines (CDI1) der Prüffelder zugeordnet wird, bei dem von der zentralen Station (RNC) die Prüffelder für jede der Diversity-Verbindungen (a; b) auswertet werden, um diejengen Datenblöcke zu erkennen, die fehlerfrei übertragen wurden, und bei dem von der zentralen Station (RNC) die über eine (a) der Diversity-Verbindungen nicht fehlerfrei übertragenen Datenblöcke (TB1) durch die auf einer der anderen Diversity-Verbindung (b) fehlerfrei übertragenen Datenblöcke (TB1') ersetzt werden,
**dadurch gekennzeichnet, daß**
in jedem Datenrahmen (F) die Datenblöcke (TB1, TB2, ... TBn) direkt aneinander gereiht werden (Schritt 111), wobei jeder Datenblock (TB1) eine durch die Zahl Acht teilbare Anzahl von Bits enthält, und daß jeder Datenrahmen (F) einen Prüfblock (CB) enthält, in den die Prüffelder (CID1, CID2, ... CIDn) eingefügt werden.

2. Verfahren (100) nach Anspruch 1, **dadurch gekennzeichnet, daß**
die Prüffelder (CID1, CID2, ... CIDn) jeweils mindestens ein Bit enthalten, daß alle Bits der Prüffelder (CID1, CID2, ... CIDn) zusammenhängend in den Prüfblock (CB) geschrieben werden und daß gegebenenfalls der Prüfblock (CB) mit Füllbits (PAD) aufgefüllt wird (Schritt 112), so daß auch der Prüfblock (CB) eine durch die Zahl Acht teilbare Anzahl von Bits enthält.

3. Verfahren (100) nach Anspruch 2, **dadurch gekennzeichnet, daß**
für jeden Datenrahmen (F) aus den Bits der Prüffelder ein Prüfwort (CWa; CWb) gebildet wird (Schritt 123), daß zunächst für eine (a) der Diversity-Verbindungen das Prüfwort (CWa) mit einem ersten Referenzwort (M1) verglichen wird (Schritt 124), um zumindest einen nicht fehlerfrei auf dieser Diversity-Verbindung (a) übertragenen Datenblock (TB1) zu erkennen, und daß anschließend für eine andere (b) der Diversity-Verbindungen das
entsprechende Prüfwort (CWb) mit einem zweiten Referenzwort (M2) verglichen wird, um zu erkennen, ob der entsprechende Datenblock (TB1') auf dieser Diversity-Verbindung (b) fehlerfrei übertragen wurde.

4. Verfahren (100) nach Anspruch 3, **dadurch gekennzeichnet, daß**
durch eine logische UND-Verknüpfung des Prüfworts (CWa) mit dem ersten Referenzwort (M1) ein erstes Ergebnis (R1) berechnet wird (Schritt 124), daß durch eine logische ODER-Verknüpfung dieses ersten Ergebnisses (R1) mit dem negierten ersten Referenzwort ein erster Zwischenwert (PR1) berechnet wird und daß durch Negation dieses ersten Zwischenwertes das zweite Referenzwort (M2) berechnet wird (Schritt 126).

5. Verfahren nach Anspruch 1, **dadurch gekennzeichnet, daß**
dann, wenn zumindest ein fehlerhaft übertragener Datenblock nicht durch einen entsprechenden fehlerfrei übertragenen Datenblock ersetzt werden kann, das Verfahren nach Ablauf einer vorgebaren Zeitdauer abgebrochen wird.

6. Datenrahmen (F) zum Übertragen von Datenblöcken (TB1, TB2, ... TBn) von einer ersten Funkfeststation (NBa), die sich zusammen mit mindestens einer zweiten Funkfeststation (NBb) im Makro-Diversity-Zustand befindet, über eine Diversity-Verbindung (a) an eine zentrale Station (RNC), bei dem jedem (TB1) der Datenblöcke ein Prüffeld (CID1) zugeordnet ist, damit die zentrale Station (RNC) die Prüffelder auswertet, um diejengen Datenblöcke (TB2, ... TBn) zu erkennen, die fehlerfrei übertragen wurden, und um nicht fehlerfrei übertragene Datenblöcke (TB1) zu erkennen und diese durch die auf einer anderen Diversity-Verbindung (b) fehlerfrei übertragenen Datenblöcke (TB1') zu ersetzen,
**dadurch gekennzeichnet, daß**
in dem Datenrahmen (F) die Datenblöcke (TB1, TB2, ... TBn) direkt aneinander gereiht sind, wobei jeder Datenblock (TB1) eine durch die Zahl Acht teilbare Anzahl von Bits enthält, und daß der Datenrahmen (F) einen Prüfblock (CB) enthält, in den die Prüffelder (CID1, CID2, ... CIDn) eingefügt werden.

7. Mobilfunksystem mit einer zentralen Station (RNC) und mit mindestens zwei sich im Makro-Diversity-Zustand befindenden Funkfeststationen (NBa; NBb), die über mindestens zwei Diversity-Verbindungen (a; b) Datenblöcke (TB1, TB2, ... TBn) zusammen mit Prüffeldern (CID1, CID2, ... CIDn) innerhalb von Datenrahmen (F; F') an die zentrale Station (RNC) senden, wobei jedem (TB1) der Datenblöcke eines (CDI1) der Prüffelder zugeordnet ist, mit einem in der zentralen Station (RNC) angeordneten Empfänger, der die Datenblöcke (TB1, TB2, ... TBn) zusammen mit den Prüffeldern (CID1, CID2, ... CIDn) empfängt und der ein Diversity-Empfangsteil (DHO) enthält, das die Prüffelder für jede der Diversity-Verbindungen (a; b) auswertet, um diejengen Datenblöcke zu erkennen, die fehlerfrei übertragen wurden, und das die über eine (a) der Diversity-Verbindungen nicht fehlerfrei übertragenen Datenblöcke (TB1) durch die auf einer der anderen Diversity-Verbindung (b) fehlerfrei übertragenen Datenblöcke (TB1') ersetzt,
**dadurch gekennzeichnet, daß**
in jeder (NBa) der Funkfeststationen ein Sender angeordnet ist, der in jedem Datenrahmen (F) die Datenblöcke (TB1, TB2, ... TBn) direkt aneinander reiht, wobei jeder Datenblock (TB1) eine durch die Zahl Acht teilbare Anzahl von Bits enthält, und daß jeder Datenrahmen (F) einen Prüfblock (CB) enthält, in den der Sender die Prüffelder (CID1, CID2, ... CIDn) einfügt.

8. Zentrale Station (RNC), die mit mindestens zwei sich im Makro-Diversity-Zustand befindenden Funkfeststationen (NBa; NBb) über mindestens zwei Diversity-Verbindungen (a; b) verbunden ist und die einen Empfänger enthält, der Datenblöcke (TB1, TB2, ... TBn) zusammen mit Prüffeldern (CID1, CID2, ... CIDn) innerhalb von Datenrahmen (F; F') empfängt, die von den Funkfeststationen (NBa; NBb) an die zentrale Station (RNC) gesendet werden, wobei jedem (TB1) der Datenblöcke eines (CDI1) der Prüffelder zugeordnet ist, mit einem Empfänger angeordneten Diversity-Empfangsteil (DHO), das die Prüffelder für jede der Diversity-Verbindungen (a; b) auswertet, um diejengen Datenblöcke zu erkennen, die fehlerfrei übertragen wurden, und das die über eine (a) der Diversity-Verbindungen nicht fehlerfrei übertragenen Datenblöcke (TB1) durch die auf einer der anderen Diversity-Verbindung (b) fehlerfrei übertragenen Datenblöcke (TB1') ersetzt,
**dadurch gekennzeichnet, daß**
in jedem Datenrahmen (F) die Datenblöcke (TB1, TB2, ... TBn) direkt aneinander gereiht sind, wobei jeder Datenblock (TB1) eine durch die Zahl Acht teilbare Anzahl von Bits enthält, daß die Prüffelder (CID1, CID2, ... CIDn) in einen Prüfblock (CB) eingefügt sind, und daß das Diversity-Empfangsteil (DHO) eine Auswerteeinheit, die zunächst den Prüfblock (CB) auswertet, und einen von der Auswerteeinheit gesteuerten Datenspeicher enthält, der anschließend die fehlerfrei übertragenen Datenblöcke (TB1, TB2', ... TBn) speichert.

9. Funkfeststation (NB1), die sich zusammen mit mindestens einer weiteren Funkfeststation (NB2) im Makro-Diversity-Zustand befindet, in dem die Funkfeststationen Datenblöcke (TB1, TB2, ... TBn) zusammen mit Prüffeldern (CID1, CID2, ... CIDn) innerhalb von Datenrahmen (F; F') an eine zentrale Station (RNC) senden, mit einem Sender, der jedem (TB1) der Datenblöcke eines (CDI1) der Prüffelder zugeordnet, damit die zentrale Station (RNC) die Prüffelder für jede der Diversity-Verbindungen (a; b) auswertet, um diejengen Datenblöcke zu erkennen, die fehlerfrei übertragen wurden und um die über eine (a) der Diversity-Verbindungen nicht fehlerfrei übertragenen Datenblöcke (TB1) durch die auf einer der anderen Diversity-Verbindung (b) fehlerfrei übertragenen Datenblöcke (TB1') zu ersetzen,
**dadurch gekennzeichnet, daß**
der Sender der Funkfeststation (NB1) in jedem Datenrahmen (F) die Datenblöcke (TB1, TB2, ... TBn) direkt aneinander reiht, wobei jeder Datenblock (TB1) eine durch die Zahl Acht teilbare Anzahl von Bits enthält, und daß der Sender die Prüffelder (CID1, CID2, ... CIDn) in einen Prüfblock (CB) einfügt.

10. Funkfeststation (NB1) nach Anspruch 9, **dadurch gekennzeichnet, daß** die Funkfeststation (NB1) einen Funkempfänger, der Nutzdaten von einer Mobilstation (UE) empfängt und auf Fehler prüft, und eine rechnergesteuerte Einheit enthält, die mit dem Empfänger und dem Sender verbunden ist und die die Nutzdaten in die Datenblöcke (TB1, TB2, ... TBn) schreibt, wobei die rechnergesteuerte Einheit solche der Datenblöcke (TB1), in die fehlerhafte Nutzdaten geschrieben werden, durch Einträge in die entsprechenden Prüffelder (CID1) markiert.

## Claims

1. A method (100) of transmitting data blocks (TB1, TB2, ..., TBn) from at least two radio base stations (NBa; NBb) employing macrodiversity over at least two diversity links (a; b) to a cental station (RNC), comprising transmitting the data blocks (TB1, TB2, ..., TBn) together with check fields (CID1, CID2, ..., CIDn) within data frames (F; F') from the base stations (NBa; NBb) to the central station (RNC), with each (TB1) of the data blocks being assigned one (CDI1) of the check fields, analyzing the check fields for each of the diversity links (a; b) at the central station (RNC) to identify those data blocks which were received without error, and replacing at the central station (RNC) the erroneous data blocks (TB1) received over one (a) of the diversity links with the data blocks (TB1') received without error over another one (b) of the diversity links,
**characterized in**
**that** in each data frame (F), the data blocks (TB1, TB2, ..., TBn) are arranged immediately side by side (step 111), with each data block (TB1) containing a number of bits divisible by 8, and that each data frame (F) contains a check block (CB) into which the check fields (CID1, CID2, ..., CIDn) are inserted.

2. A method (100) as claimed in claim 1, **characterized in that** each of the check fields (CID1, CID2, ..., CIDn) contains at least one bit, that all bits of the check fields (CID1, CID2, ..., CIDn) are written into the check block (CB) in an unbroken sequence, and that, if necessary, the check block (CB) is filled with padding bits (PAD) (step 112), so that the check block (CB), too, contains a number of bits divisible by 8.

3. A method (100) as claimed in claim 2, **characterized in that** for each data frame (F), a check word (CWa; CWb) is formed from the bits of the check field (step 123), that for one (a) of the diversity links, the check word (CWa) is compared with a first reference word (M1) (step 124) to detect at least one erroneous data block (TB1) received over said diversity link (a), and that for another one (b) of the diversity links, the corresponding check word (CWb) is then compared with a second reference word (M2) to determine whether the corresponding data block (TB1') was received without error over said other diversity link (b).

4. A method (100) as claimed in claim 3, **characterized in that** a first result (R1) is obtained by forming the logic AND of the check word (CWa) and the first reference word (M1) (step 124), that a first intermediate value (PR1) is obtained by forming the logic OR of said first result (R1) and the negated first reference word, and that the second reference word (M2) is obtained by negating said first intermediate value (step 126).

5. A method as claimed in claim 1, **characterized in that**, if at least one erroneous data block cannot be replaced with a corresponding error-free data block, the method is terminated after expiration of a predeterminable period of time.

6. A data frame (F) for transmitting data blocks (TB1, TB2, ..., TBn) from a first radio base station (NBa), which is in a macrodiversity state with at least a second radio base station (NBb), over a diversity link (a) to a central station (RNC), wherein each (TB1) of the data blocks is assigned a check field (CID1) so that the central station (RNC) can analyze the check fields to identify those data blocks (TB2, ..., TBn) which were received without error, and to detect erroneous data blocks (TB1) and replace said erroneous data blocks (TB1) with the data blocks (TB1') received without error over another one (b) of the diversity links,
**characterized in**
**that** in the data frame (F), the data blocks (TB1, TB2, ..., TBn) are arranged immediately side by side, with each data block (TB1) containing a number of bits divisible by 8, and that the data frame (F) contains a check block (CB) into which the check fields (CID1, CID2, ..., CIDn) are inserted.

7. A mobile radio system comprising a central station (RNC) and at least two base stations (NBa; NBb) employing macrodiversity which transmit data blocks (TB1, TB2, ..., TBn) together with check fields (CID1, CID2, ..., CIDn) within data frames (F; F') over at least two diversity links (a; b) to the central station (RNC), with each (TB1) of the data blocks being assigned one (CDI1) of the check fields, the central station (RNC) comprising a receiver which receives the data blocks (TB1, TB2, ..., TBn) together with the check fields (CID1, CID2, ..., CIDn) and which comprises a diversity receiving section (DHO) which analyzes the check fields for each of the diversity links (a; b) to identify the data blocks received without error, and which replaces the erroneous data blocks (TB1) received over one (a) of the diversity links with the data blocks (TB1') received without error over another one (b) of the diversity links,
**characterized in**
**that** each (NBa) of the base stations comprises a transmitter which arranges the data blocks (TB1, TB2, ..., TBn) in each data frame (F) immediately side by side, with each data block (TB1) containing a number of bits divisible by 8, and that each data frame (F) contains a check block (CB) into which the transmitter inserts the check fields (CID1, CID2, ..., CIDn).

8. A central station (RNC) connected with at least two radio base stations (NBa; NBb) by at least two diversity links (a; b), said at least two radio base stations employing macrodiversity, said central station (RNC) comprising a receiver which receives data blocks (TB1, TB2, ..., TBn) together with check fields (CID1, CID2, ..., CIDn) within data frames (F; F') transmitted from the radio base stations (NBa, NBb) to the central station (RNC), with each (TB1) of the data blocks being assigned one (CDI1) of the check fields, said receiver comprising a diversity receiving section (DHO) which analyzes the check fields for each of the diversity links (a; b) to identify the data blocks received without error, and which replaces the erroneous data blocks (TB1) received over one (a) of the diversity links with the data blocks (TB1') received without error over another one (b) of the diversity links,
**characterized in**
**that** in each data frame (F), the data blocks (TB1, TB2, ..., TBn) are arranged immediately side by side, with each data block (TB1) containing a number of bits divisible by 8, that the check fields (CID1, CID2, ..., CIDn) are inserted in a check block (CB), and that the diversity receiving section (DHO) comprises an analyzing unit for analyzing the check block (CB) and a data memory controlled by the analyzing unit for subsequently storing the data blocks (TB1, TB2', ..., Tbn) received without error.

9. A radio base station (NB1) which together with at least one further radio base station (NB2) is in a macrodiversity state in which the radio base stations transmit data blocks (TB1, TB2, ..., TBn) together with check fields (CID1, CID2, ..., CIDn) within data frames (F; F') to a central station (RNC), said radio base station (NB1) comprising a transmitter which assigns one (CDI1) of the check fields to each (DB1) of the data blocks so that the central station (RNC) can analyze the check fields for each of the diversity links (a; b) in order to identify the data blocks received without error and to replace the erroneous data blocks (TB1) received over one (a) of the diversity links with the data blocks (TB1') received without error over another one (b) of the diversity links,
**characterized in**
**that** the transmitter of the radio base station (NB1) arranges the data blocks (TB1, TB2, ..., TBn) in each data frame (F) immediately side by side, with each data block (TB1) containing a number of bits divisible by 8, and that the transmitter inserts the check fields (CID1, CID2, ..., CIDn) into a check block (CB).

10. A radio base station (NB1) as claimed in claim 9, **characterized in that** the radio base station (NB1) comprises a receiver for receiving user data from a mobile station (UE) and checking said user data for errors and a computer-controlled unit connected to the receiver and the transmitter for writing the user data into the data blocks (TB1, TB2, ..., TBn), with the computer-controlled unit marking those of the data blocks (TB1) into which erroneous user data are written by entries in the corresponding check fields (CID1).

## Revendications

1. Procédé (100) de transmission de blocs de données (TB1, TB2, ..TBn) d'au moins deux stations mobiles radio se trouvant dans un état de macro diversité (NBa ; NBb) sur au moins deux connexions de diversité (a ; b) à une station centrale (RNC), par lequel les blocs de données (TB1, TB2, ..TBn) avec les champs d'essai (CID1, CID2, ... CIDn) sont envoyés par las stations mobiles radio (NBa ; NBb) à l'intérieur des cadres de données (F ; F') à la station centrale (RNC), moyennant quoi est attribué le bloc de données d'un champ d'essai (CID1) à chaque bloc de données (TB1), par lequel les blocs d'essai sont évalués par la station centrale (RNC) pour chacune des connexions de diversité (a ; b), afin de reconnaître ces blocs de données, qui ont été transmis de manière exacte et par lequel les blocs de données (TB1) transmis de manière erronée sur une des connexions de diversité (a) par la station centrale (RNC) sont remplacés par les blocs de données transmis de manière exacte (TB1') sur une des autres connexions de diversité (b),
**caractérisé en ce que**
dans chaque cadre de données (F) les blocs de données (TB1, TB2, ..TBn) sont directement rassemblés les uns après les autres (étape 111), moyennant quoi chaque bloc de données (TB1) contient un nombre de bits divisible par le chiffre huit et que chaque cadre de données (F) contient un bloc de contrôle (CB) dans lequel les champs d'essai (CID1, CID2, ...CIDn) sont ajoutés.

2. Procédé (100) selon la revendication 1, **caractérisé en ce que** les champs d'essai (CID1, CID2, ...CIDn) selon le cas contiennent au moins un bit, que tous les bits des champs d'essai (CID1, CID2, ...CIDn) sont écrits en grappes dans le bloc de contrôle (CB)et que le cas échéant le bloc de contrôle (CB) est rempli par des bits de remplissage (PAD) (étape 112) pour que le bloc de contrôle (CB) contienne un nombre de bits divisible par le chiffre huit.

3. Procédé (100) selon la revendication 2, **caractérisé en ce que** pour chaque cadre de données (F) un mot de contrôle (CWa ; CWb) est formé ) à partir des bits des blocs d'essai (étape 123), que tout d'abord pour une (a) des connexions de diversité, le mot de contrôle (CWa) est comparé avec un premier mot de référence (M1) (étape 124), pour reconnaître au moins un bloc de données (TB1) transmis de manière erronée sur cette connexion de diversité (a), et qu'immédiatement après pour une autre (b) des connexions de diversité le mot de contrôle correspondant (CWb) est comparé avec un deuxième mot de référence (M2), pour reconnaître si le bloc de données correspondant (TB1') a été transmis de manière exacte sur cette connexion de diversité (b).

4. Procédé (100) selon la revendication 3, **caractérisé en ce que**, un premier résultat (R1) est calculé (étape 124) par une liaison ET logique du mot de contrôle (CWa) avec un premier mot de référence (M1), que une première valeur intermédiaire (PR1) est calculé par une liaison OU logique de ce premier résultat (R1) avec le nouveau premier mot de référence inversé et que le deuxième mot de référence (M2) est calculé par la négation de cette première valeur intermédiaire (étape 126).

5. Procédé selon la revendication 1, **caractérisé en ce que** si au moins un bloc de données transmis de manière erronée ne peut pas être remplacé par un bloc de données correspondant transmis de manière exacte, le procédé est interrompu après le passage d'une durée spécifiable.

6. Cadre de données (F) de transmission de blocs de données (TB1, TB2, ..TBn) par une première station mobile radio (NBa), qui se trouve avec au moins une seconde station mobile radio (NBb) dans un état de macro diversité, sur une connexion de diversité (a) à une station centrale (RNC), par lequel à chacun (TB1)des blocs de données est attribué un champ d'essai (CID1), par ce moyen la station centrale (RNC) évalue les champs d'essai, pour reconnaître les blocs de données (TB2, ...TBn) qui ont été transmis de manière exacte et pour reconnaître les blocs de données (TB1) transmis de manière erronée et remplacer ces derniers par les blocs de données (TB1') transmis de manière exacte sur une des autres connexions de diversité (b),
**caractérisé en ce que**,
dans la cadre de données (F) les blocs de données (TB1, TB2, ..TBn) sont alignés directement, moyennant quoi chaque bloc de données (TB1) contient un nombre de bits divisible par la chiffre huit, et que le cadre de données (F) contient un champ d'essai (CB), dans lequel les champs d'essai (CID1, CID2, ..CIDn) sont insérés.

7. Système de service radio-téléphonique mobile avec une station centrale (RNC) et avec au moins deux stations mobiles radio (NBa ; NBb) se trouvant en état de macro diversité, qui envoient sur au moins deux connexions de diversité (a ; b) des blocs de données (TB1, TB2, ...TBn) avec des champs d'essai (CID1, CID2, ...CIDn) à l'intérieur de cadres de données (F, F') à la station centrale (RNC), moyennant quoi, un des champs d'essai (CID1) est attribué à chacun des blocs de données (TB1), avec un récepteur ordonné dans la station centrale (RNC), qui reçoit les blocs de données (TB1, TB2, ...TBn) avec les champs d'essai (CID1, CID2,...CIDn) et qui contient une zone de réception de diversité (DHO), qui évalue les champs d'essai pour chacune des connexions de diversité (a ; b), pour reconnaître les blocs de données, qui ont été transmis de manière exacte et qui remplace les blocs de données (TB1) transmis de manière erronée sur une des connexions de diversité (a) par les blocs de données (TB1') transmis de manière exacte sur une des autres connexions de diversité (b),
**caractérisé en ce que**
dans chacune (NBa) des stations mobiles radio est arrangé un émetteur, qui assemble directement les blocs de données (TB1, TB2, ...TBn) dans chaque cadre de données (F), moyennant quoi chaque bloc de données (TB1) contient un bloc de contrôle (CB), dans lequel l'émetteur ajoute les champs d'essai (CID1, CID2, ...CIDn).

8. Station centrale (RNC), qui est liée à au moins deux stations mobiles radio (NBa ; NBb) se trouvant en état de macro diversité sur au moins deux connexions de diversité (a ; b) et qui contient un récepteur, reçoit les blocs de données (TB1, TB2, ...TBn) avec des champs d'essai (CID1, CID2, ...CIDn) à l'intérieur des cadres de données (F, F'), qui sont envoyés par les stations mobiles radio (NBa ; NBb) à la station centrale (RNC), moyennant quoi à chacun des blocs de données (TB1) est attribué un des champs d'essai (CID1), avec une zone de réception de diversité (DHO) arrangée du récepteur, qui évalue les blocs d'essai pour chacune des connexions de diversité (a ; b), pour reconnaître les blocs de données, qui ont été transmis de manière exacte, et qui remplace les blocs de données (TB1) transmis de manière erronée sur une des connexions de diversité (a) par les blocs de données (TB1') transmis de manière exacte sur une des autres connexions de diversité (b),
**caractérisé en ce que**,
dans chaque cadre de données (F) les blocs de données (TB1, TB2, ...TBn) sont alignés directement, moyennant quoi chaque bloc de données (TB1) contient un nombre de bits divisible par le chiffre huit, que les champs d'essai (CID1, CID2, ...CIDn) sont ajoutés dans un bloc de contrôle (CB) et que la zone de réception de diversité (DHO) contient une unité d'évaluation, qui évalue en premier lieu le bloc de contrôle (CB) et une mémoire de données commandé par l'unité d'évaluation, qui mémorise immédiatement après les blocs de données transmis de manière exacte (TB1, TB2, ...TBn).

9. Station mobile radio (NB1), qui se trouve avec au moins une autre station mobile radio (NB2) en état de macro diversité, dans lequel les stations mobiles radio envoient les blocs de données(TB1, TB2, ...TBn) avec les champs d'essai (CID1, CID2, ...CIDn) à l'intérieur des cadres de données (F ; F') à une station centrale (RNC), avec un émetteur, qui attribue à chacun des blocs de données (TB1) un des champs d'essai (CID1), pour que la station centrale (RNC) évalue les champs d'essai pour chacune des connexions de diversité (a ; b), pour reconnaître les blocs de données, qui ont été transmis de manière exacte et pour remplacer les blocs de données (TB1) transmis de manière erronée sur une (a) des connexions de diversité par les blocs de données (TB1') transmis de manière exacte sur une des autres connexions de diversité (b),
**caractérisé en ce que**
l'émetteur de la station mobile radio (NB1) dans chaque cadre de données (F) aligne directement les blocs de données (TB1, TB2, ...TBn), moyennant quoi chaque bloc de données (TB1) contient un nombre de bits divisible par le chiffre huit et **en ce que** l'émetteur ajoute les champs d'essai (CID1, CID2, ..CIDn) dans un bloc de contrôle (CB).

10. Station mobile radio (NB1) selon la revendication 9, **caractérisée par le fait que** la station mobile radio (NB1) contient un récepteur radio, qui reçoit les données utiles à partir d'un station mobile (UE) et vérifie les erreurs, ainsi qu'une unité commandée numériquement par calculateur, qui est reliée au récepteur et à l'émetteur et qui écrit les données utiles dans les blocs de données (TB1, TB2, ..TBn), moyennant quoi l'unité commandée numériquement par calculateur repère ces blocs de données (TB1), dans lesquels sont écrites les données utiles erronées, par des inscriptions dans les champs d'essai correspondants (CID1).
